# EUROPEAN PATENT APPLICATION

(11) **EP 3 223 020 A1**
(43) Date of publication of application: **27.09.2017**
(21) Application number: 17155090.8
(22) Date of filing: 07.02.2017
(51) Int. Cl.: G01P 5/26, G01P 13/02, G01S 17/58

(54) **HYBRID AIR DATA SYSTEM USING LIDAR AND LEGACY AIR DATA SENSORS**

(30) Priority: 22.03.2016 US 201662311805 P; 03.06.2016 US 201615172745
(71) Applicant: Honeywell International Inc., Morris Plains, NJ 07950 (US)
(72) Inventor: LODDEN, Grant, Morris Plains, NJ 07950 (US); KIMMEL, Danny Thomas, Morris Plains, NJ 07950 (US); FAN, Xiao Zhu, Morris Plains, NJ 07950 (US)
(74) Representative: Houghton, Mark Phillip

(57) **Abstract**

An air data system comprises an optical air data system comprising one or more LiDAR channels that each include at least one line-of-sight for air data interrogation, wherein the LiDAR channels are configured to output a set of air data signals. An optional non-optical air data system comprises one or more non-optical air data sensors selected from one or more pitot sensors, one or more static pressure sensors, one or more temperature sensors, one or more angle of attack vanes, one or more angle of sideslip vanes, one or more multifunction probes, or combinations thereof. The non-optical air data sensors are configured to output a set of air data signals. One or more processors are coupled to the LiDAR channels and the non-optical air data sensors when present. The processors are configured to use the air data signals to conduct signal analysis, data processing, data augmentation, voting, or combinations thereof.

## Description

This application claims the benefit of priority to U.S. Provisional Application No. 62/311,805, filed on March 22, 2016, the disclosure of which is incorporated by reference.

### BACKGROUND

Air data parameters are collected via various instrumentations on-board aircraft. Air data parameters, including air speed, air temperature, angle of attack/sideslip (AoA/AoS) and air density/pressure are used to compute true air speed (TAS), calibrated air speed (CAS), Mach number, static air temperature, and density/pressure derived altitude.

Conventional fixed wing aircraft rely on an ensemble of legacy (also known as traditional) air data systems consisting of zero, one, or more of Pitot tubes and associated sensors, static pressure ports and associated sensors, temperature sensors, and AoA and/or AoS vanes, to obtain the air data measurands required for the flight management system as well as cockpit instruments and displays. Alternately, zero, one, or more multifunction probes may provide all or a subset of the aforementioned functionality. Some of the legacy air data sensors suffer from long-term stability problems.

Pitot probes and pitot-static probes are susceptible to failure, mainly due to icing or other obstructions and have been the root cause in a number of tragic incidents. Other drawbacks of pitot probes include: decreases in accuracy at high angles of attack; decreases in airspeed accuracy at low velocity; calibration being required for each airframe (static source error correction); aerodynamic drag, especially at high Mach numbers; accuracy and repeatability decrease with probe wear and other factors, such as paint waviness or aircraft modifications. While much research and development has been dedicated to overcoming these shortcomings, pitot probes face fundamental limitations that cannot be overcome.

### SUMMARY

An air data system comprises an optical air data system comprising one or more light detection and ranging (LiDAR) channels, each of the one or more LiDAR channels including at least one line-of-sight for air data interrogation, wherein the one or more LiDAR channels are configured to output a first set of air data signals. An optional non-optical air data system comprises one or more non-optical air data sensors, the one or more non-optical air data sensors selected from the group consisting of one or more pitot sensors, one or more static pressure sensors, one or more temperature sensors, one or more angle of attack vanes, one or more angle of sideslip vanes, one or more multi-function probes, and combinations thereof. The one or more non-optical air data sensors are configured to output a second set of air data signals. One or more processors are operatively coupled to the one or more LiDAR channels and the one or more non-optical air data sensors when present. The one or more processors are configured to use the air data signals to conduct signal analysis, data processing, data augmentation, voting, or combinations thereof.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 illustrates an exemplary embodiment of a hybrid air data system for an aircraft; and
Figure 2 is a block diagram of a hybrid air data system, which depicts the flow of air data information for various possible sensor combinations.

### DETAILED DESCRIPTION

In the following detailed description, reference is made to the accompanying drawings that form a part hereof, and in which is shown by way of illustration specific illustrative embodiments. It is to be understood that other embodiments may be utilized and that logical, mechanical, and electrical changes may be made. The following detailed description is, therefore, not to be taken in a limiting sense.

A hybrid air data system for aircraft is provided that employs light detection and ranging (also written as LIDAR, LiDAR, or LADAR) air data sensors, and optional legacy air data sensors including multifunction probes, in different combinations, which are used to generate various air data measurands.

The hybrid air data system generally comprises an optical air data system comprising one or more LiDAR channels that each include at least one line-of-sight for air data interrogation, with the one or more LiDAR channels configured to output a set of air data signals. An optional non-optical air data system can also be employed and comprises one or more non-optical air data sensors selected from one or more pitot sensors, one or more static pressure sensors, one or more temperature sensors, one or more angle of attack vanes, one or more angle of sideslip vanes, one or more multi-function probes, and combinations thereof. The one or more non-optical air data sensors are configured to output another set of air data signals. In addition, one or more processors is operatively coupled to the LiDAR channels and the non-optical air data sensors when present. The processors are configured to use the air data signals to conduct signal analysis, data processing, data augmentation, voting, or combinations thereof.

LiDAR air data acquisition circumvents the problems encountered by pitot probes and other legacy air data sensors. The LiDAR sensor remotely interrogates a volume of free stream air using a laser and analyzes the backscattered reflection (molecular and aerosol, or molecular only or aerosol only) of the laser to derive air data parameters. These air data parameters include, but are not limited to, true air speed vector, air temperature, altitude, and air density. The air speed vector is derived from the backscattered Doppler shift. The air temperature, altitude, and air density are derived from the backscattered spectrum lineshape. Because the LiDAR optical sensor head can be flush mounted to the aircraft vehicle and fully enclosed in the interior, LiDAR sensors circumvent the reliability and aerodynamic drag issues encountered by extruding pitot tubes and temperature sensors. Furthermore, there are no fundamental limitations of reduced accuracy at high angles of attack or low velocity. Processing of air data parameters can be done locally, such as with air data computers, or on some other available computational platform fed by air data modules.

System designs that incorporate both legacy and LiDAR air data sensors into a single hybrid system take advantage of each system's strengths or, in another implementation, augment each system's performance. These system architectures can produce more accurate and reliable air data information. Furthermore, the presence of complimentary, but dissimilar technology facilitates safer aviation and avoids common-mode failure. In addition, the costs associated with system calibration, aerodynamic drag, and sensor maintenance can be dramatically reduced.

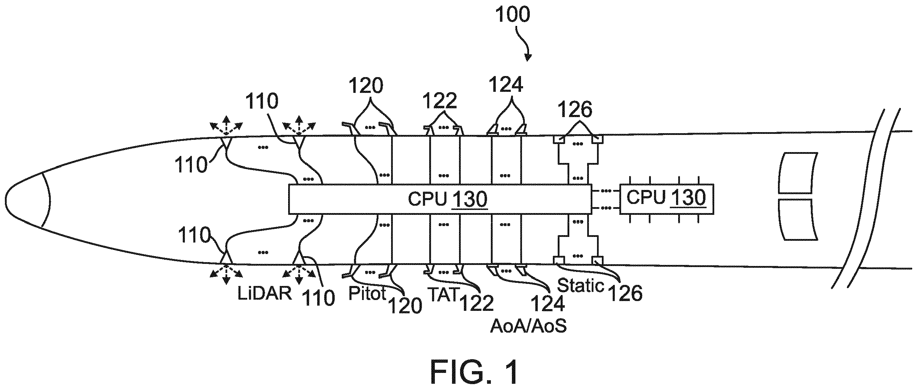

Figure 1 is an exemplary embodiment of a hybrid air data system 100, which includes multiple LiDAR sensors 110, as well as multiple non-optical sensors including pitot probes 120, temperature sensors (TAT) 122, angle of attack and angle of sideslip (AoA/AoS) vanes 124, and static pressure ports 126. As shown in Figure 1, each LiDAR sensor 110 includes at least one line-of-sight for air data interrogation. In addition, each of the sensors is operatively coupled to one or more air data central processing units (CPUs) 130, which use the sensor outputs to conduct signal analysis, data processing, data augmentation, voting, or combinations thereof.

Many different processing and analysis algorithms can be implemented in the one or more CPUs, including but not limited to, cross checking and verification of air data output; augmenting the performance (accuracy, output rate, compensation) of air data output of one sensor with the information from another sensor; receiving output from one or more sensors to derive new or redundant air data parameter(s); and using redundant air data parameters for monitoring sensor health and voting. The CPU algorithms can also take into account additional information available on the aircraft to better decrypt and analyze sensor signal output. In addition, the CPU has the capability to assign weight and vote on the importance of the incoming data based on the raw and/or processed data that is available. The CPU can ultimately determine the most accurate and/or confident air data to be passed on to the flight management system.

The hybrid air data system can include primary and standby air data systems in a multitude of combinations, which are summarized in Table 1. Such combinations depend on the requirements for a specific platform, such as size, weight, power, and cost (SWaP-C); air data accuracies and latencies; number of redundancies; and the like. For example, a primary air data system can include zero or more legacy systems and/or sensor types (e.g., static pressure sensors), and one or more LiDAR channels. A standby air data system can include an independent legacy system or a LiDAR system.

**Table 1**

| | **Primary System** | | | | | | **Standby System** | |
|---|---|---|---|---|---|---|---|---|
| **LiDAR System** | **Pitot Probe** | **Static Port** | **Temperature Probe** | **AoA Vane** | **AoS Vane** | **Multi-Function Probe** | **Legacy System** | **LiDAR System** |
| 1 or more | | | | | | 0, 1, or more | 0 or 1 | 1 or 0 |
| 1 or more | 1 or more | | | | | 0, 1, or more | 0 or 1 | 1 or 0 |
| 1 or more | | 1 or more | | | | 0, 1, or more | 0 or 1 | 1 or 0 |
| 1 or more | | | 1 or more | | | 0, 1, or more | 0 or 1 | 1 or 0 |
| 1 or more | | | | 1 or more | | 0, 1, or more | 0 or 1 | 1 or 0 |
| 1 or more | | | | | 1 or more | 0, 1, or more | 0 or 1 | 1 or 0 |
| 1 or more | 1 or more | 1 or more | | | | 0, 1, or more | 0 or 1 | 1 or 0 |
| 1 or more | 1 or more | | 1 or more | | | 0, 1, or more | 0 or 1 | 1 or 0 |
| 1 or more | 1 or more | | | 1 or more | | 0, 1, or more | 0 or 1 | 1 or 0 |
| 1 or more | 1 or more | | | | 1 or more | 0, 1, or more | 0 or 1 | 1 or 0 |
| 1 or more | | 1 or more | | 1 or more | | 0, 1, or more | 0 or 1 | 1 or 0 |
| 1 or more | | 1 or more | | | 1 or more | 0, 1, or more | 0 or 1 | 1 or 0 |
| 1 or more | | | 1 or more | 1 or more | | 0, 1, or more | 0 or 1 | 1 or 0 |
| 1 or more | | | 1 or more | | 1 or more | 0, 1, or more | 0 or 1 | 1 or 0 |
| 1 or more | | | | 1 or more | 1 or more | 0, 1, or more | 0 or 1 | 1 or 0 |
| 1 or more | 1 or more | 1 or more | 1 or more | | | 0, 1, or more | 0 or 1 | 1 or 0 |
| 1 or more | 1 or more | | 1 or more | 1 or more | | 0, 1, or more | 0 or 1 | 1 or 0 |
| 1 or more | 1 or more | | | 1 or more | 1 or more | 0, 1, or more | 0 or 1 | 1 or 0 |
| 1 or more | 1 or more | 1 or more | | 1 or more | | 0, 1, or more | 0 or 1 | 1 or 0 |
| 1 or more | 1 or more | 1 or more | | | 1 or more | 0, 1, or more | 0 or 1 | 1 or 0 |
| 1 or more | | 1 or more | 1 or more | 1 or more | | 0, 1, or more | 0 or 1 | 1 or 0 |
| 1 or more | | 1 or more | | 1 or more | 1 or more | 0, 1, or more | 0 or 1 | 1 or 0 |
| 1 or more | | 1 or more | 1 or more | | 1 or more | 0, 1, or more | 0 or 1 | 1 or 0 |
| 1 or more | | | 1 or more | 1 or more | 1 or more | 0, 1, or more | 0 or 1 | 1 or 0 |
| 1 or more | 1 or more | 1 or more | 1 or more | 1 or more | | 0, 1, or more | 0 or 1 | 1 or 0 |
| 1 or more | 1 or more | | 1 or more | 1 or more | 1 or more | 0, 1, or more | 0 or 1 | 1 or 0 |
| 1 or more | 1 or more | 1 or more | | 1 or more | 1 or more | 0, 1, or more | 0 or 1 | 1 or 0 |
| 1 or more | 1 or more | 1 or more | 1 or more | 1 or more | | 0, 1, or more | 0 or 1 | 1 or 0 |
| 1 or more | 1 or more | 1 or more | 1 or more | | 1 or more | 0, 1, or more | 0 or 1 | 1 or 0 |
| 0, 1 or more | 1 or more | 1 or more | 1 or more | 1 or more | 1 or more | 0, 1, or more | 0 or 1 | 1 or 0 |

As indicated in Table 1, each legacy system sensor can include zero, one, or more pitot probe(s) and associated sensor(s); zero, one, or more static ports and associated pressure sensor(s); zero, one, or more temperature sensors; zero, one, or more AoA and/or AoS vanes; and zero, one, or more multi-function probes. Each LiDAR channel can include at least one line-of-sight (LOS) for air data interrogation. In one embodiment, a minimum of three LOS can be used to obtain a full air speed vector profile. Additional LOS can be used for data redundancy and enhancement purposes. In another embodiment, AoA and AoS rotary vane outputs can be used to deduce a full airspeed vector profile with a single LOS if that LOS contains velocity contributions from all three axes.

When a failure is detected in the primary air data system for the one or more LiDAR channels or the one or more non-optical air data sensors, the standby air data system is activated to operate in place of the failed one or more LiDAR channels or non-optical air data sensors.

In an alternative embodiment, the primary air data system can be a legacy system, with the standby air data system being a LiDAR system.

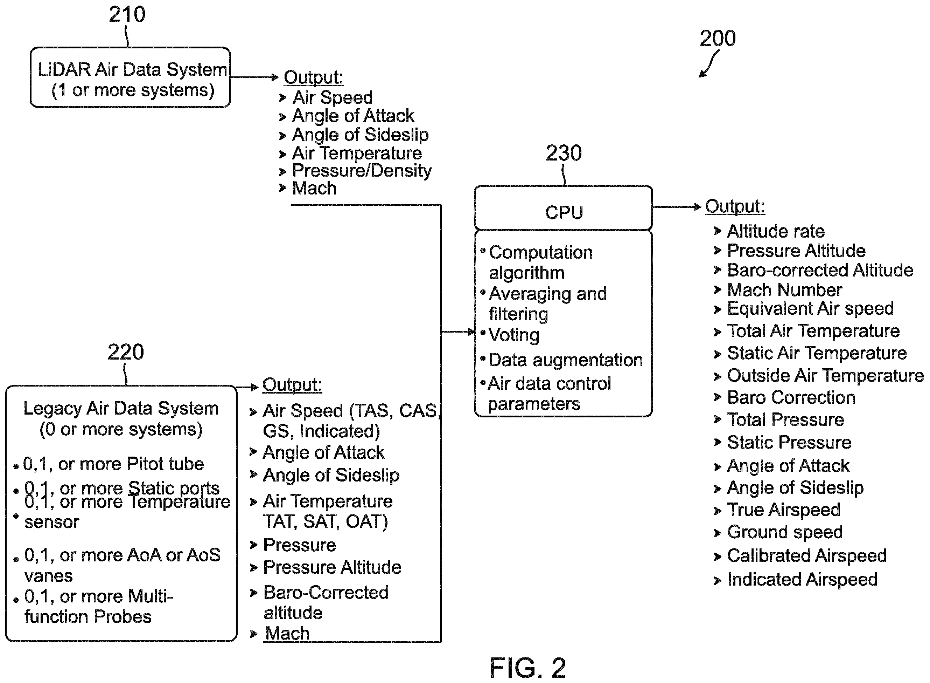

Figure 2 is a block diagram of a hybrid air data system 200, which depicts the flow of air data information from various sensor combinations in a LiDAR air data system 210 and an optional legacy air data system 220 to an air data CPU 230. Figure 2 lists the possible output data from each of the LiDAR air data system 210, legacy air data system 220, and air data CPU 230.

For example, LiDAR air data system 210, which can be implemented as one or more systems, provides for free stream interrogation, has a flush mounted optical head, and includes one or more lines-of-sight. The output from LiDAR air data system 210 includes air speed, angle of attack, angle of sideslip, air temperature, pressure/density, pressure/density altitude, and Mach number.

The optional legacy air data system 220 may contain zero, one, or more pitot tubes; zero, one, or more static ports; zero, one, or more temperature sensors; zero, one, or more AoA and/or AoS vanes; and zero, one, or more multi-function probes. The output from legacy air data system 220 includes air speed, such as true airspeed (TAS), calibrated airspeed (CAS), ground speed (GS), and indicated airspeed; angle of attack, and angle of sideslip; air temperature including total air temperature (TAT), static air temperature (SAT), and outside air temperature (OAT); pressure; pressure altitude, and barometric-corrected altitude; Mach number; and rate of climb or descent.

The outputs from LiDAR air data system 210 and legacy air data system 220 are sent to CPU 230, which runs a computation algorithm, performs averaging and filtering, performs voting operations, handles data augmentation, and produces air data control parameters. The output from CPU 230 includes altitude rate, pressure altitude, barometric-corrected altitude, Mach number, equivalent air speed, total air temperature, static air temperature, outside air temperature, barometric correction, total pressure, static pressure, angle of attack, angle of sideslip, true airspeed, ground speed, calibrated airspeed, and indicated airspeed.

A processor used in the present system can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer readable instructions for carrying out various process tasks, calculations, and control functions used in the present method and system.

The present methods can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard disks, compact disks, or other optical storage disks; volatile or non-volatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

### Example Embodiments

Example 1 includes an air data system comprising: an optical air data system comprising one or more light detection and ranging (LiDAR) channels, each of the one or more LiDAR channels including at least one line-of-sight for air data interrogation, wherein the one or more LiDAR channels are configured to output a first set of air data signals; an optional non-optical air data system comprising one or more non-optical air data sensors, the one or more non-optical air data sensors selected from the group consisting of one or more pitot sensors, one or more static pressure sensors, one or more temperature sensors, one or more angle of attack vanes, one or more angle of sideslip vanes, one or more multi-function probes, and combinations thereof, wherein the one or more non-optical air data sensors are configured to output a second set of air data signals; and one or more processors operatively coupled to the one or more LiDAR channels and the one or more non-optical air data sensors when present, the one or more processors configured to use the air data signals to conduct signal analysis, data processing, data augmentation, voting, or combinations thereof.
Example 2 includes the air data system of Example 1, wherein the first set of air data signals includes air speed, angle of attack, angle of sideslip, air temperature, pressure/density, pressure/density altitude, or Mach number.
Example 3 includes the air data system of any of Examples 1-2, wherein the second set of air data signals includes air speed, angle of attack, angle of sideslip, air temperature, pressure, pressure altitude, barometric-corrected altitude, Mach number, or rate of climb/descent.
Example 4 includes the air data system of Example 1, wherein the one or more processors is operatively coupled to one or more pitot sensors; and optionally, one or more multi-function probes.
Example 5 includes the air data system of Example 1, wherein the one or more processors is operatively coupled to one or more static pressure sensors; and optionally, one or more multi-function probes.
Example 6 includes the air data system of Example 1, wherein the one or more processors is operatively coupled to one or more temperature sensors; and optionally, one or more multi-function probes.
Example 7 includes the air data system of Example 1, wherein the one or more processors is operatively coupled to one or more angle of attack vanes; and optionally, one or more multi-function probes.
Example 8 includes the air data system of Example 1, wherein the one or more processors is operatively coupled to one or more angle of sideslip vanes; and optionally, one or more multi-function probes.
Example 9 includes the air data system of Example 1, wherein the one or more processors is operatively coupled to one or more multi-function probes.
Example 10 includes the air data system of Example 4, wherein the one or more processors is further operatively coupled to the non-optical air data sensors selected from the group consisting of one or more static pressure sensors; one or more temperature sensors; one or more angle of attack vanes; and one or more angle of sideslip vanes.
Example 11 includes the air data system of Example 5, wherein the one or more processors is further operatively coupled to the non-optical air data sensors selected from the group consisting of one or more angle of attack vanes; and one or more angle of sideslip vanes.
Example 12 includes the air data system of Example 6, wherein the one or more processors is further operatively coupled to the non-optical air data sensors selected from the group consisting of one or more angle of attack vanes; and one or more angle of sideslip vanes.
Example 13 includes the air data system of Example 7, wherein the one or more processors is further operatively coupled to one or more angle of sideslip vanes.
Example 14 includes the air data system of Example 4, wherein the one or more processors is further operatively coupled to the non-optical air data sensors selected from the groups consisting of one or more static pressure sensors and one or more temperature sensors; one or more temperature sensors and one or more angle of attack vanes; one or more angle of attack vanes and one or more angle of sideslip vanes; one or more static pressure sensors and one or more angle of attack vanes; and one or more static pressure sensors and one or more angle of sideslip vanes.
Example 15 includes the air data system of Example 5, wherein the one or more processors is further operatively coupled to the non-optical air data sensors selected from the groups consisting of one or more temperature sensors and one or more angle of attack vanes; one or more angle of attack vanes and one or more angle of sideslip vanes; and one or more temperature sensors and one or more angle of sideslip vanes.
Example 16 includes the air data system of Example 6, wherein the one or more processors is further operatively coupled to one or more angle of attack vanes, and one or more angle of sideslip vanes.
Example 17 includes the air data system of Example 4, wherein the one or more processors is further operatively coupled to the non-optical air data sensors selected from the groups consisting of one or more static pressure sensors, one or more temperature sensors, and one or more angle of attack vanes; one or more temperature sensors, one or more angle of attack vanes, and one or more angle of sideslip vanes; one or more static pressure sensors, one or more angle of attack vanes, and one or more angle of sideslip vanes; and one or more static pressure sensors, one or more temperature sensors, and one or more angle of sideslip vanes.
Example 18 includes the air data system of Example 4, wherein the one or more processors is further operatively coupled to one or more static pressure sensors, one or more temperature sensors, one or more angle of attack vanes, and one or more angle of sideslip vanes.
Example 19 includes a hybrid air data system comprising: a primary air data system comprising a first optical air data system comprising one or more LiDAR channels, each of the one or more LiDAR channels including at least one line-of-sight for air data interrogation, wherein the one or more LiDAR channels are configured to output a first set of air data signals; and optionally, a first non-optical air data system comprising one or more non-optical air data sensors, the one or more non-optical air data sensors selected from the group consisting of one or more pitot sensors, one or more static pressure sensors, one or more temperature sensors, one or more angle of attack vanes, one or more angle of sideslip vanes, one or more multi-function probes, and combinations thereof, wherein the one or more non-optical air data sensors are configured to output a second set of air data signals. A standby air data system comprises a second optical air data system comprising one or more LiDAR channels, each of the one or more LiDAR channels including at least one line-of-sight for air data interrogation, wherein the one or more LiDAR channels are configured to output a third set of air data signals; or a second non-optical air data system comprising one or more non-optical air data sensors, the one or more non-optical air data sensors selected from the group consisting of one or more pitot sensors, one or more static pressure sensors, one or more temperature sensors, one or more angle of attack vanes, one or more angle of sideslip vanes, one or more multi-function probes, and combinations thereof, wherein the one or more non-optical air data sensors are configured to output a fourth set of air data signals. One or more processors is operatively coupled to the primary air data system and the standby air data system, the one or more processors configured to use the air data signals to conduct signal analysis, data processing, data augmentation, voting, or combinations thereof. When a failure is detected in the primary air data system for the one or more LiDAR channels or the one or more non-optical air data sensors when present, the standby air data system is activated to operate in place of the failed one or more LiDAR channels or non-optical air data sensors.
Example 20 includes a hybrid air data system comprising: a primary air data system comprising a non-optical air data system comprising one or more non-optical air data sensors, the one or more non-optical air data sensors selected from the group consisting of one or more pitot sensors, one or more static pressure sensors, one or more temperature sensors, one or more angle of attack vanes, one or more angle of sideslip vanes, one or more multi-function probes, and combinations thereof, wherein the one or more non-optical air data sensors are configured to output a first set of air data signals. A standby air data system comprises an optical air data system comprising one or more LiDAR channels, each of the one or more LiDAR channels including at least one line-of-sight for air data interrogation, wherein the one or more LiDAR channels are configured to output a second set of air data signals. One or more processors is operatively coupled to the primary air data system and the standby air data system, the one or more processors configured to use the air data signals to conduct signal analysis, data processing, data augmentation, voting, or combinations thereof. When a failure is detected in the primary air data system for the one or more non-optical air data sensors, the standby optical air data system is activated to operate in place of the failed one or more non-optical air data sensors.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An air data system, comprising:
an optical air data system comprising one or more light detection and ranging (LiDAR) channels, each of the one or more LiDAR channels including at least one line-of-sight for air data interrogation, wherein the one or more LiDAR channels are configured to output a first set of air data signals;
an optional non-optical air data system comprising one or more non-optical air data sensors, the one or more non-optical air data sensors selected from the group consisting of one or more pitot sensors, one or more static pressure sensors, one or more temperature sensors, one or more angle of attack vanes, one or more angle of sideslip vanes, one or more multi-function probes, and combinations thereof, wherein the one or more non-optical air data sensors are configured to output a second set of air data signals; and
one or more processors operatively coupled to the one or more LiDAR channels and the one or more non-optical air data sensors when present, the one or more processors configured to use the air data signals to conduct signal analysis, data processing, data augmentation, voting, or combinations thereof.

2. The air data system of claim 1, wherein the one or more processors is operatively coupled to:
one or more pitot sensors; and
optionally, one or more multi-function probes.

3. The air data system of claim 1, wherein the one or more processors is operatively coupled to:
one or more static pressure sensors; and
optionally, one or more multi-function probes.

4. The air data system of claim 1, wherein the one or more processors is operatively coupled to:
one or more temperature sensors; and
optionally, one or more multi-function probes.

5. The air data system of claim 1, wherein the one or more processors is operatively coupled to:
one or more angle of attack vanes; and
optionally, one or more multi-function probes.

6. The air data system of claim 1, wherein the one or more processors is operatively coupled to:
one or more angle of sideslip vanes; and
optionally, one or more multi-function probes.

7. The air data system of claim 2, wherein the one or more processors is further operatively coupled to the non-optical air data sensors selected from the group consisting of:
one or more static pressure sensors;
one or more temperature sensors;
one or more angle of attack vanes; and
one or more angle of sideslip vanes.

8. The air data system of claim 3, wherein the one or more processors is further operatively coupled to the non-optical air data sensors selected from the group consisting of:
one or more angle of attack vanes; and
one or more angle of sideslip vanes.

9. The air data system of claim 4, wherein the one or more processors is further operatively coupled to the non-optical air data sensors selected from the group consisting of:
one or more angle of attack vanes; and
one or more angle of sideslip vanes.

10. The air data system of claim 5, wherein the one or more processors is further operatively coupled to one or more angle of sideslip vanes.

## Amended claims

### Amended claims in accordance with Rule 137(2) EPC.

1. A hybrid air data system (100, 200), comprising:
a first air data system, comprising:
a non-optical air data system (220) comprising one or more non-optical air data sensors, the one or more non-optical air data sensors selected from the group consisting of one or more pitot sensors (120), one or more static pressure sensors (126), one or more temperature sensors (122), one or more angle of attack vanes (124), one or more angle of sideslip vanes (124), one or more multi-function probes, and combinations thereof, wherein the one or more non-optical air data sensors are configured to output a first set of air data signals;
a second air data system, comprising:
an optical air data system (210) comprising one or more light detection and ranging, LiDAR, channels (110), each of the one or more LiDAR channels including at least one line-of-sight for air data interrogation, wherein the one or more LiDAR channels are configured to output a second set of air data signals; and
one or more processors (130, 230) operatively coupled to the first air data system and the second air data system, the one or more processors configured to use the air data signals to conduct signal analysis, data processing, data augmentation, voting, or combinations thereof;
wherein when a failure is detected in the first air data system for the one or more non-optical air data sensors, the optical air data system operates in place of the failed one or more non-optical air data sensors.

2. The hybrid air data system of claim 1, wherein the one or more processors are operatively coupled to the one or more pitot sensors, and the one or more static pressure sensors.

3. The hybrid air data system of claim 1, wherein the non-optical air data system comprises the one or more pitot sensors, the one or more static pressure sensors, the one or more temperature sensors, and the one or more angle of attack vanes.

4. The air data system of claim 3, wherein the non-optical air data system further comprises the one or more angle of sideslip vanes.

5. The air data system of claim 3, wherein the non-optical air data system further comprises the one or more multi-function probes.

6. The hybrid air data system of claim 1, wherein the one or more processors comprise one or more air data computers, or one or more computational platforms fed by one or more respective air data modules.

7. The hybrid air data system of claim 1, wherein the one or more processors are configured to assign weight and vote on importance of incoming data based on raw and/or processed data that is available.

8. The hybrid air data system of claim 1, wherein the first set of air data signals includes air speed, angle of attack, angle of sideslip, air temperature, pressure, pressure altitude, barometric-corrected altitude, Mach number, or rate of climb/descent.

9. The hybrid air data system of claim 1, wherein the second set of air data signals includes air speed, angle of attack, angle of sideslip, air temperature, pressure/density, pressure/density altitude, or Mach number.

10. The hybrid air data system of claim 1, wherein the one or more processors are configured execute one or more algorithms comprising:
cross checking and verification of air data output;
augmenting performance of air data output of one sensor with information from another sensor;
receiving output from one or more sensors to derive new or redundant air data parameters; or
using redundant air data parameters for monitoring sensor health and voting.
